# EUROPÄISCHE PATENTANMELDUNG

(11) **EP 1 357 010 A1**
(43) Veröffentlichungstag der Anmeldung: **29.10.2003**
(21) Anmeldenummer: 02450099.3
(22) Anmeldetag: 23.04.2002
(51) Int. Cl.: B61K 9/04

(54) **Temperaturmesseinrichtung für Radsatzlager bei Schienenfahrzeugen**

(71) Anmelder: Siemens SGP Verkehrstechnik GmbH, 1110 Wien (AT)
(72) Erfinder: Alexandru, Theodor Cesar, 8020 Graz (AT)
(74) Vertreter: Matschnig, Franz, Dipl.-Ing.

(57) **Zusammenfassung**

Vorrichtung zur Detektion eines heißgelaufenen Radlagers (RLA) eines Rades (RAD) eines Schienenfahrzeugs mittels eines in einem Bereich des Radlagers angeordneten Temperatursensors (TTS), wobei das Radlager (RLA) von einem Lagerdeckel (LDE) abgedeckt ist, welcher mittels Lagerdeckelschrauben (LDS) mit dem Radlager (RLA) verbunden ist, wobei zumindest eine Lagerdeckelschraube (LDS) als Hohlschraube (HOS) mit einem ihren Schraubkopf (SKO) durchsetzenden, sackförmigen Hohlraum (HOL) ausgebildet ist, in welchem der Temperatursensor (TTS) angeordnet ist.

## Beschreibung

Die Erfindung betrifft eine Vorrichtung zur Detektion eines heißgelaufenen Radlagers eines Rades eines Schienenfahrzeugs mittels eines in einem Bereich des Radlagers angeordneten Temperatursensors, wobei das Radlager von einem Lagerdeckel abgedeckt ist, welcher mittels Lagerdeckelschrauben mit dem Radlager verbunden ist.

Der zuverlässigen Erkennung von Heißläufern bei Schienenfahrzeugen kommt eine große Bedeutung sowohl in wirtschaftlicher, vor allem aber in sicherheitstechnischer Hinsicht, zu.

Eine Vorrichtung der eingangs genannten Art ist beispielsweise aus der WO 00/51869 bekannt geworden. Die bekannte Vorrichtung weist ein Gehäuse für das Radlager auf, wobei auf einem Dichtungsring innerhalb des Gehäuses neben einem Beschleunigungssensor ein Temperatursensor zur Messung der Radlagertemperatur angeordnet sein kann. Von dem im Inneren des Gehäuses angeordneten Temperatursensor ist ein Signalübertragungskabel zu einer Auswerteeinheit geführt.

Nachteilig an der bekannten Vorrichtung ist vor allem, dass der Temperatursensor sehr schwer zugänglich ist, was vor allem bei Reparatur- bzw. Wartungsarbeiten mit einem hohen Zeitaufwand verbunden sein kann. Darüber hinaus ist bauartbedingt eine aufwendige Gestaltung eines zu einer Auswerteeinheit führenden Signalübertragungskabels notwendig. Darüber hinaus ist der Nachrüstaufwand mit der bekannten Vorrichtung sehr hoch, da sämtliche Lagerdeckel des Schienenfahrzeuges und des Radsatzvorrates ausgetauscht werden müssen.

In Zusammenhang mit der Temperaturmessung von Radlagern sind auch Systeme bekannt geworden, bei welchen der thermische Zustand eines Radlagers mittels neben den Schienen stationär angeordneten Infrarotsensoren erfasst wird. Eine derartige Einrichtung zum Überwachen der Lagertemperatur ist beispielsweise in der DE 41 07 649 C2 beschrieben. Die bekannte Einrichtung weist ein stationär neben der Schiene angeordnetes Infrarotgerät sowie einen fahrzeugseitig angeordneten, elektrisch aufheizbaren Infrarotgeber auf. Der Infrarotgeber kann hierbei beispielsweise in der Nähe eines äußeren Radlagers angebracht sein. Nachteilig an den bekannten stationären Anlagen zur Erkennung eines Heißläufers ist vor allem, dass häufig Fehlermeldungen auftreten, da stationäre Ortungsanlagen das Heißlaufen eines Radlagers nicht von dem Heißwerden einer Radscheibe - bei einer Scheibenbremsenausführung - unterscheiden können. Durch falsche Fehlermeldungen kann den Betreibern von Schienenfahrzeugen infolge von Verzögerungen und den damit verbundenen logistischen Schwierigkeiten ein großer wirtschaftlicher Schaden entstehen. Ein weiterer Nachteil ist auch, dass derartige stationäre Anlagen üblicherweise ca. 30 km voneinander entfernt sind, und ein dazwischen auftretender Heißläufer erst mit einer großen Zeitverzögerung erkannt werden kann.

Es ist daher eine Aufgabe der Erfindung, einen Weg zu schaffen, der es ermöglicht, auf einfache und kostengünstige Weise mit hoher Zuverlässigkeit die Temperatur eines Radsatzlagers zu messen und der darüber hinaus eine einfache Wartung des Sensors ermöglicht.

Diese Aufgabe wird mit einer Vorrichtung der eingangs genannten Art erfindungsgemäß dadurch gelöst, dass zumindest eine Lagerdeckelschraube als Hohlschraube mit einem ihren Schraubkopf durchsetzenden, sackförmigen Hohlraum ausgebildet ist, in welchem der Temperatursensor angeordnet ist.

Die Erfindung ermöglicht durch eine relativ einfache und billige Umgestaltung einer einzelnen Komponente - einer Lagerdeckelschraube - die Anbringung eines Temperatursensors an einer Stelle des Radsatzlagers eines Schienenfahrzeuges, an welcher relevante Aussagen über die Wärmeerzeugung und Temperaturentwicklung des überwachten Lagers getroffen werden können. Aus diesem Grund kann die Radlagerung selbst weitgehend unverändert bleiben. Weiters kann durch die erfindungsgemäße Lösung der Wartungsaufwand minimiert werden, da der Sensor sich an einer leicht zugänglichen Stelle des Radsatzlagers befindet und leicht ausgetauscht werden kann. Ebenso lässt sich der Nachrüstungsaufwand für bestehende Radlager mit der erfindungsgemäßen Lösung sehr gering halten.

Eine vorteilhafte Ausführungsform der Erfindung sieht vor, dass ein zumindest abschnittsweise in den Hohlraum einführbarer Sensorstab vorgesehen ist, der eine bauliche Einheit mit dem Temperatursensor bildet, wobei in dem Sensorstab Signalkabel zur Übertragung von Temperatursignalen von dem Temperatursensor an eine Auswerteeinheit verlaufen.

Die Montage des Temperatursensors kann dadurch vereinfacht werden, dass ein von dem Sensorstab durchsetzter Sensorsockel vorgesehen ist, wobei der Sensorsockel zumindest abschnittsweise in den Hohlraum einführbar ist.

Günstigerweise ist der Sensorsockel mit der Hohlschraube in montiertem Zustand im wesentlichen starr verbunden, wobei der Sensorstab um seine Längsachse drehbar in der Hohlschraube gelagert sein kann.

Vorteilhafterweise ist der Sensorstab mit einem Anschlussstück für eine Ummantelung für Signalübertragungskabel formschlüssig verbunden, wobei der Sensorstab und das Anschlussstück drehfest miteinander verbunden sein können.

Um das Ausschrauben der Hohlschraube zu ermöglichen, ohne dass man gezwungen ist, den Sensor aus der Schraube auszubauen, kann das Anschlussstück gegenüber der Hohlschraube um eine zur Längserstreckung der Hohlschraube im wesentlichen parallel Achse drehbar gelagert sein.

Um einen optimalen Wärmeschluss zwischen dem Temperatursensor und der Lagerdeckelschraube zu gewährleisten, kann zwischen dem Temperatursensor und den Innenwänden des Hohlraums eine Wärmeleitpaste vorgesehen sein.

Die Erfindung samt weiterer Vorteile wird im folgenden anhand einiger nicht einschränkender Ausführungsbeispiele näher erläutert, welche in der Zeichnung veranschaulicht sind. In dieser zeigen schematisch:
Fig. 1 zeigt ein Radsatzlager mit einer erfindungsgemäßen Vorrichtung zur Detektion eines heißgelaufenen Radlagers;
Fig. 2 eine Lagerdeckelschraube, wie sie dem Stand der Technik entspricht;
Fig. 3 ein Radsatzlager im näheren Detail;
Fig. 4 eine erfindungsgemäße Vorrichtung im näheren Detail.

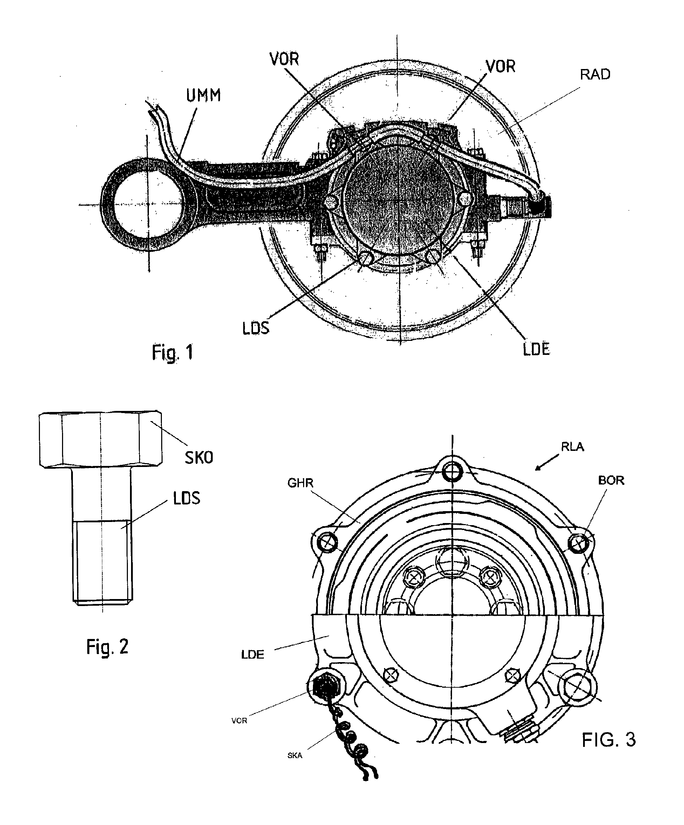

Gemäß den Fig.1-3 ist das Radlager RLA eines Rades RAD eines Schienenfahrzeuges mit einem Lagerdeckel LDE abgedeckt, wobei der Lagerdeckel LDE mittels Lagerdeckelschrauben LDS auf einen Gehäusering GHR des Radlagers RLA befestigbar ist. Zu diesem Zweck weist der Gehäusering GHR Bohrungen BOR auf, die ein mit einem Gewinde der Lagerdeckelschrauben LDS korrespondierendes Gewinde aufweisen können. Die Lagerdeckelschrauben LDS können gemäß Fig. 2 beispielsweise einen Sechskant Schraubkopf SKO nach der Norm M 5010/1977 aufweisen.

Erfindungsgemäß wird die Temperatur im Bereich einer Lagerdeckelschraube LDS gemessen, da sich in zahlreichen Versuchen herausgestellt hat, dass durch Messungen in diesem Bereich für das gesamte Radlager RLA repräsentative Temperaturwerte erhalten werden können. Durch die leichte Zugänglichkeit der Lagerdeckelschrauben LDS lässt sich darüber hinaus auch die Messung auf sehr einfache Art realisieren.

Eine erfindungsgemäße Vorrichtung VOR zur Detektion eines heißgelaufenen Radlagers RLA eines Schienenfahrzeugs weist eine Lagerdeckelschraube LDS auf die als Hohlschraube ausgebildet ist. In der hier dargestellten Ausführungsform der Erfindung sind zwei erfindungsgemäße Messschrauben mit je einem Temperatursensor vorgesehen, wobei Signalkabel beider Temperatursensoren über eine gemeinsame Ummantelung UMM, beispielsweise einen Schlauch, zu einer Auswerteeinheit geführt sind.

Die erfindungsgemäße Lagerdeckelschraube LDS wird in den Gehäusering des Lagers eingeschraubt, welcher unmittelbar mit einem Außenring des Lagers in Kontakt steht und daher mit diesem thermisch gekoppelt ist.

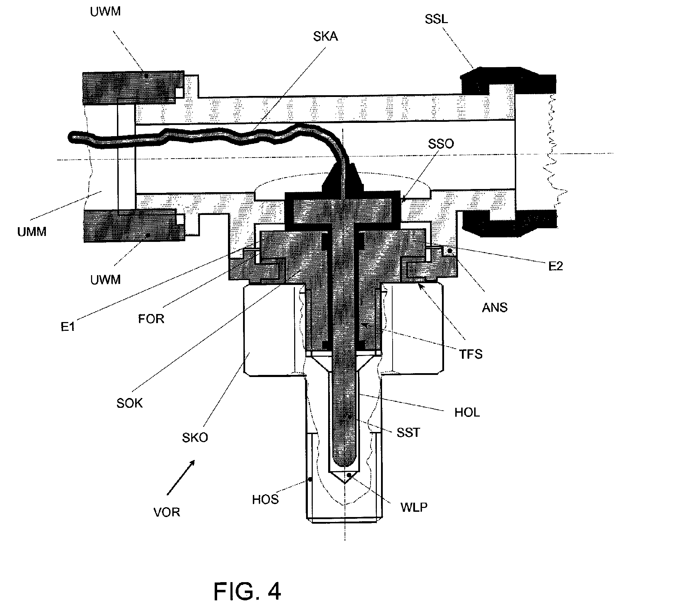

Nach Fig. 4 ist ein hier als Einheit mit einem Sensorstab SST dargestellter Temperatursensor vorgesehen, der in das Innere der Lagerdeckelschraube LDS einsetzbar ist. Zu diesem Zweck ist mindestens eine Lagerdeckelschraube LDS vorgesehen, die als Hohlschraube HOS ausgebildet ist und einen ihren Schraubkopf SKO durchsetzenden, sackförmigen Hohlraum HOL aufweist, dessen Längsachse im wesentlichen parallel zur Längsachse der Lagerdeckelschraube LDS verläuft, wobei der Temperatursensor im Inneren des Hohlraums HOL angeordnet ist.

Der Temperatursensor kann in einen zumindest abschnittsweise in den Hohlraum HOL einführbaren Sensorstab SST integriert sein, wobei im Inneren des Sensorstabes SST Signalkabel SKA zur Übertragung von Temperatursignalen von dem Temperatursensor an eine hier nicht dargestellte Auswerteeinheit, beispielsweise einen entsprechend programmierten Computer oder Mikrocomputer, verlaufen können.

Der Zwischenraum zwischen den Wänden des Holraums HOL und dem Sensorstab SST kann mittels einer Wärmeleitpaste WLP ausgefüllt sein, um einen guten Wärmeschluss zwischen dem Temperatursensor und der Lagerdeckelschraube herzustellen.

Mit dem Sensorstab SST lässt sich auf einfache Art eine definierte Lage des Temperatursensors in der Lagerdeckelschraube LDS herstellen, wodurch sich die Zuverlässigkeit der Messung weiter erhöhen lässt.

Die einfachste Möglichkeit der Anbringung des Sensorstabes SST in der Hohlschraube HOS besteht in einer fixen Verbindung zwischen Sensorstab SST und Hohlschraube HOS. Zu diesem Zweck kann der Sensorstab SST beispielsweise mit der Hohlschraube HOS verklebt sein. Um einen Anschluss zu einer Ummantelung UMM herzustellen kann der Sensorstab SST einen Sockel SSO aufweisen. Bei der Variante der Erfindung, bei welcher der Sensorstab fix mit der Hohlschraube HOS verbunden ist, wird der Sensorstab SST bei einem Ein- und Ausschrauben der Hohlschraube HOS samt Signalkabel SKA mitgedreht, wodurch es zu einem Verdrehen der Signalkabel SKA kommen kann. Zu diesem Zweck kann zur elektronischen Kontaktierung des Sensorstabes SST und zur Entkopplung von Signalkabel SKA von dem Sensorstab SST ein Steckanschluss vorgesehen sein.

Eine andere Variante der Erfindung sieht vor, dass ein Sensorsockel SOK vorgesehen ist, der sich an dem Schraubkopf SKO der Hohlschraube HOS abstützt und/oder abschnittsweise in den Hohlraum HOL eindringt. Der Sensorsockel SOK kann durch Verkleben oder aber auch durch Verschrauben mit der Hohlschraube HOS verbunden sein. Ist der Sensorsockel SOK beispielsweise mit der Hohlschraube HOS durch Verschrauben verbunden, so können der Sensorsockel SOK und Begrenzungsflächen des Hohlraums HOL der Hohlschraube HOS miteinander korrespondierende Gewinde GE1, GE2 aufweisen. Vorteilhafterweise sind hierbei der Sensorsockel SOK und der Hohlraum HOL zumindest abschnittsweise zylindermantelförmig ausgebildet. Die Außenseite des Sensorsockels SOK weist dabei in einem in den Hohlraum HOL einführbaren, zylindermantelförmigen Abschnitt mit einem kreisförmigen Querschnitt ein erstes Gewinde auf, wobei an der Innenseite einer zylindermantelförmigen Begrenzungsfläche des Hohlraumes HOL ein mit dem Gewinde des Sensorsockels SOK korrespondierendes zweites Gewinde vorgesehen ist.

Der Sensorsockel SOK ist von einem rohrförmigen, an beiden Enden geöffneten Hohlraum durchsetzt, durch welchen in montiertem Zustand der Sensorstab SST verläuft. Der Sensorstab SST kann einen, beispielsweise zylinderförmigen Sockel SSO aufweisen, der sich auf dem Sensorsockel SOK abstützt, und an diesem drehbar gelagert ist. Weiters können der Sensorstab SST und der von ihm durchsetzte Hohlraum des Sensorsockels SOK mittels einer reibungsarmen Teflonschicht beschichtet sein. Wesentlich ist jedoch, dass der Sensorstab SST bei dieser Variante der Erfindung um seine Längsachse drehbar in der Hohlschraube HOS bzw. dem Sensorsockel SOK gelagert ist.

Durch die soeben erwähnten Maßnahmen ist es ermöglicht, dass der Sensorstab SST bei Ein- bzw. Ausschrauben der erfindungsgemäßen Lagerdeckelschraube ortsfest bleiben kann, während sich die Hohlschraube HOS und der Sensorsockel SOK um den Sensorstab SST drehen lassen. Auf diese Weise wird eine drehbare Schnittstelle zwischen dem Sensorstab SST und dem Sockel SOK und der Hohlschraube HOS geschaffen.

Der Sensorsockel SOK kann auch in der Hohlschraube HOS um seine Längsachse drehbar gelagert sein. Zu diesem Zweck kann der Sensorsockel SOK in der Hohlschraube HOS beispielsweise mittels eines Sprengrings gelagert sein, wobei der Sensorsockel SOK an seiner äußeren Oberfläche eine Rille aufweisen kann in welche der Sprengring abschnittsweise eingreifen kann. Auch die Hohlschraube kann bei dieser Ausführungsform eine Rille zur abschnittsweisen Aufnahme des Sprengrings aufweisen. Sind der Sockel SOK und die Hohlschraube HOS auf diese Weise miteinander drehbar verbunden, so lassen sie sich nicht mehr oder nur sehr schwer voneinander lösen. Bei der Variante der Erfindung, bei welcher der Sensorsockel SOK drehbar in der Hohlschraube gelagert ist, kann der Sensorstab SST auch mit dem Sockel SOK starr verbunden sein, beispielsweise durch Verkleben.

In einer weiteren möglichen Ausführungsform der Erfindung kann der Sensorsockel SOK an seinem dem Schraubkopf SKO der Hohlschraube HOS gegenüberliegenden Endbereich einen Fortsatz FOR mit einem T-förmigen Querschnitt aufweisen. Die freien Enden E1, E2 dieses Fortsatzes FOR können als Anschlag für einen Anschluss ANS einer Ummantelung UMM, beispielsweise einen Schlauch, zur Führung und zum Schutz der Signalkabel SKA vorgesehen sein. Durch diesen Schlauch SCH sind die Signalkabel SKA zu der Auswerteeinheit geführt. Der Anschluss ANS kann beispielsweise mit einer Überwurfmutter UWM oder mit einem Schrumpfschlauch SSL mit der Ummantelung UMM verbunden sein.

In der hier dargestellten Ausführungsform ist der Anschluss ANS als Verteilerstück mit einem T-förmigen Querschnitt ausgeführt, wobei auch die Signalkabel SKA' anderer Sensoren durch das Verteilerstück verlaufen können. Der Sensorstab SST kann an einem außerhalb der Hohlschraube HOS liegenden Endbereich formschlüssig mit dem Anschluss ANS ausgeführt sein, wobei die Form des mit dem Anschluss ANS korrespondierenden Endbereiches des Sensorstabs SST so ausgebildet ist, dass ein Verdrehen des Sensorstabs SST gegen den Anschluss ANS bzw. das Verteilerstück ausgeschlossen ist. Weiters kann der Anschluss ANS an dem Fortsatz FOR um eine Achse normal zu einer im wesentlichen zu einer Grundfläche des Schraubkopfes SKO parallel verlaufenden Ebene drehbar gelagert sein. Somit ist in dieser Ausführungsform der Anschlag ANS bzw. das Verteilerstück um eine Achse parallel zur Längserstreckung der Hohlschraube HOS drehbar. Zwischen den freien Enden E1, E2 des Fortsatzes FOR und dem Anschluss ANS kann hierzu beispielsweise ein Gleitlager GLL vorgesehen sein. Durch diese drehbare Konstruktion kann die Lagerdeckelschraube LDS ein- und ausgeschraubt werden, ohne dass sich die Signalkabel SKA bzw. der Schlauch bzw. das Anschlussstück ANS mit verdrehen. Auf diese Weise wird eine drehbare Schnittstelle zwischen dem Sensorsockel SOK und dem Verteilerstück geschaffen.

Somit können der Sensorstab SST und der Verteiler beim Ein- und Ausschrauben ortsfest bleiben, wobei sich die Hohlschraube HOS und der mit ihr verbundene Sockel SOK mitdrehen.

Durch die soeben beschriebene Variante der Erfindung werden zwei drehbare Schnittstellen - eine zwischen Sensorstab und Sockel und eine zwischen Sockel und Verteilerstück - und zwei unverdrehbare Schnittstellen - zwischen Sensorstab SST und Verteilerstück und zwischen Sockel SOK und Hohlschraube HOS - geschaffen. Ein Instandhaltungsarbeiter kann beim Ausbau das T-förmige Verteilerstück mit einer Zange festhalten, wobei das Verteilerstück aufgrund der formschlüssigen Anbindung an den Sensorstab SST diesen festhält. Somit wird auch das Signalkabel SKA festgehalten, wodurch ein Verdrehen des Kabels verhindert werden kann. Sodann kann die mit einem Gabelschlüssel die Hohlschraube HOS samt Sockel SOK herausgeschraubt werden.

## Patentansprüche

**1.** Vorrichtung zur Detektion eines heißgelaufenen Radlagers (RLA) eines Rades (RAD) eines Schienenfahrzeugs mittels eines in einem Bereich des Radlagers (RLA) angeordneten Temperatursensors, wobei das Radlager (RLA) von einem Lagerdeckel (LDE) abgedeckt ist, welcher mittels Lagerdeckelschrauben (LDS) mit dem Radlager (RLA) verbunden ist, **dadurch gekennzeichnet, dass** zumindest eine Lagerdeckelschraube (LDS) als Hohlschraube (HOS) mit einem ihren Schraubkopf (SKO) durchsetzenden, sackförmigen Hohlraum (HOL) ausgebildet ist, in welchem der Temperatursensor angeordnet ist.

**2.** Vorrichtung nach Anspruch 1, **dadurch gekennzeichnet, dass** ein zumindest abschnittsweise in den Hohlraum einführbarer Sensorstab (SST) vorgesehen ist, der eine bauliche Einheit mit dem Temperatursensor bildet, wobei in dem Sensorstab (SST) Signalkabel (SKA) zur Übertragung von Temperatursignalen von dem Temperatursensor an eine Auswerteeinheit verlaufen.

**3.** Vorrichtung nach Anspruch 1 oder 2, **dadurch gekennzeichnet, dass** ein von dem Sensorstab (SST) durchsetzter Sensorsockel (SOK) vorgesehen ist, wobei der Sensorsockel (SOK) zumindest abschnittsweise in den Hohlraum (HOL) einführbar ist.

**4.** Vorrichtung nach Anspruch 3, **dadurch gekennzeichnet, dass** der Sensorsockel (SOK) mit der Hohlschraube (HOS) in montiertem Zustand im wesentlichen starr verbunden ist.

**5.** Vorrichtung nach einem der Ansprüche 2 bis 4, **dadurch gekennzeichnet, dass** der Sensorstab (SST) um seine Längsachse drehbar in der Hohlschraube (HOS) gelagert ist.

**6.** Vorrichtung nach einem der Ansprüche 2 bis 5, **dadurch gekennzeichnet, dass** der Sensorstab (SST) mit einem Anschlussstück (ANS) für eine Ummantelung (UMM) für Signalübertragungskabel (SKA) formschlüssig verbunden ist.

**7.** Vorrichtung nach einem der Ansprüche 2 bis 6, **dadurch gekennzeichnet, dass** der Sensorstab und das Anschlussstück (ANS) drehfest miteinander verbunden sind. ckung der Hohlschraube (HOS) im wesentlichen parallel Achse drehbar gelagert ist.

**9.** Vorrichtung nach einem der Ansprüche 1 bis 7, **dadurch gekennzeichnet, dass** zwischen dem Sensorstab (SST) und den Innenwänden des Hohlraums (HOL) eine Wärmeleitpaste (WLP) vorgesehen ist.
